(19) Europäisches Patentamt / European Patent Office / Office européen des brevets

(11) **EP 1 835 610 A1**

(12) **DEMANDE DE BREVET EUROPEEN**

(43) Date de publication:
**19.09.2007 Bulletin 2007/38**

(51) Int Cl.:
*H02M 7/48* *(2007.01)*

(21) Numéro de dépôt: **07102692.6**

(22) Date de dépôt: **20.02.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **13.03.2006 FR 0650843**

(71) Demandeur: **Schneider Toshiba Inverter Europe SAS**
**27120 Pacy sur Eure (FR)**

(72) Inventeurs:
• **Baudesson, Philippe**
  **27220, La Boissiere (FR)**
• **Capitaneanu, Stéfan**
  **27220, Mousseaux Neuville (FR)**
• **Loizelet, Philippe**
  **27120, Le Plessis Hebert (FR)**

(74) Mandataire: **Bié, Nicolas et al**
  **Schneider Electric Industries SAS,**
  **Propriété Industrielle,**
  **89, boulevard Franklin Roosevelt**
  **92500 Rueil-Malmaison (FR)**

(54) **Procédé de paramétrage d'un convertisseur et convertisseur mettant en oeuvre le procédé**

(57) La présente invention concerne un procédé de paramétrage d'un convertisseur (1, 2) de type variateur de vitesse, ledit convertisseur (1, 2) étant relié à une charge électrique (3) par un câble électrique (4) comportant au moins deux conducteurs, le procédé consistant à :
- générer du courant de mode commun sur le câble électrique (4) à partir d'une tension pulsée comprenant un premier front de tension (11, 13) et un second front de tension (12, 14) retardé d'un délai de retard (T) par rapport au premier front de tension (11, 13),
- mesurer le courant de mode commun généré,
- faire varier le délai (T) entre les deux fronts de tension (11, 12, 13, 14) générés et déterminer un délai de retard optimal (T2) à partir d'une grandeur représentative (Icrête, Ieff) du courant de mode commun mesuré pour les différentes valeurs du délai de retard (T).

Fig. 4

EP 1 835 610 A1

## Description

La présente invention se rapporte à un procédé de paramétrage d'un convertisseur de type variateur de vitesse et à un convertisseur mettant en oeuvre le procédé. Ce procédé de paramétrage vise notamment à déterminer certains paramètres du câble électrique reliant le convertisseur à la charge électrique.

Un convertisseur de type variateur de vitesse est relié à une charge électrique par un câble électrique et comporte notamment un onduleur de tension, par exemple de type MLI (Modulation de Largeur d'Impulsions), associé à un redresseur non contrôlé et à un filtre capacitif. Le convertisseur fournit à la charge électrique une tension pulsée comprenant des fronts de tension montants ou descendants.

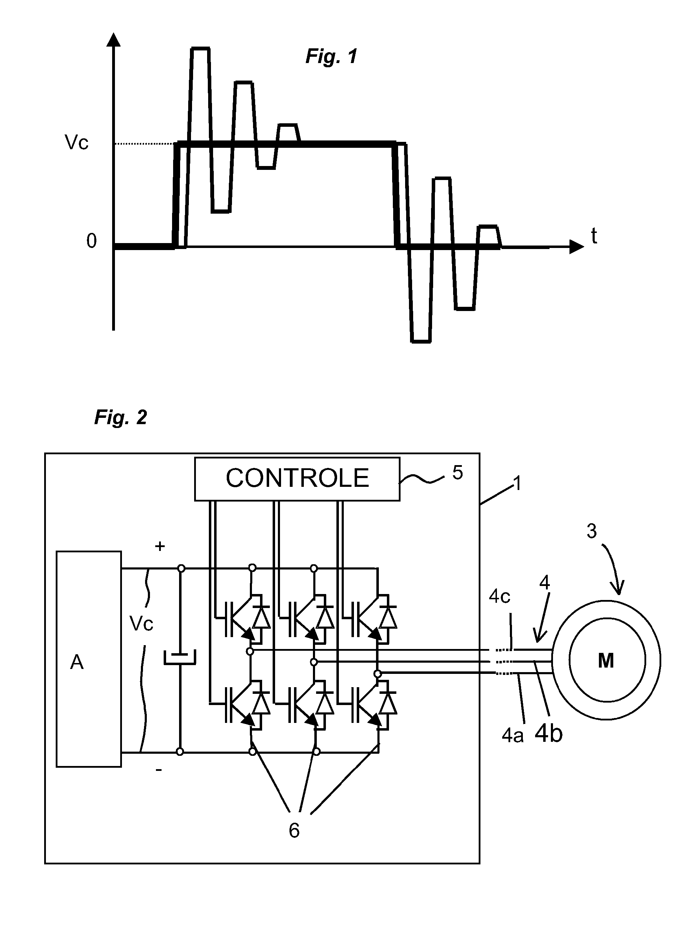

La commande MLI de la charge électrique est influencée par les caractéristiques du câble électrique reliant le variateur de vitesse à la charge électrique. Par exemple, si le câble présente une longueur importante, la charge électrique subit des surtensions dues aux réflexions des fronts de tension sur la charge (voir figure 1). Ces réflexions sont causées par les ruptures d'impédance se produisant entre la charge électrique et le câble électrique et entre le câble électrique et le convertisseur. Les oscillations de tension sont plus particulièrement dues aux allers et retours de la propagation des fronts de tension sur le câble électrique.

La fréquence de ces oscillations est donc fonction du temps de propagation d'un front de tension sur le câble, le temps de propagation étant dépendant lui-même de la longueur du câble et de la constitution du câble.

Il est connu par le document EP1580873 (ou US2005207194) un dispositif et un procédé de commande d'un convertisseur permettant de limiter les surtensions aux bornes de la charge électrique lors de son fonctionnement normal, lesdites surtensions étant liées aux réflexions d'ondes se produisant entre le convertisseur et le moteur. Ce document prévoit de générer, à l'aide d'un convertisseur multiniveaux de type NPC (pour "Neutral Point Clamped"), une tension pulsée à trois niveaux de tension, comprenant deux fronts de tension successifs, l'envoi du second front de tension étant retardé d'un délai par rapport au premier front de tension. Le premier front de tension est par exemple réalisé entre une première valeur faible ou nulle et une valeur intermédiaire. Après un certain délai de retard pendant lequel la tension est maintenue à la valeur intermédiaire, le second front de tension est envoyé entre la valeur intermédiaire et une valeur finale supérieure à la valeur intermédiaire. Le délai observé entre le premier front de tension et le second front de tension permet de compenser les oscillations et les perturbations générées par le premier front de tension.

Pour minimiser les surtensions aux bornes de la charge électrique, le délai de retard à observer entre l'envoi de deux fronts de tension doit être optimal. Ce délai de retard dépend de la longueur et des caractéristiques du câble. Des câbles a priori tous identiques ne génèrent donc pas forcément des surtensions identiques aux bornes de la charge électrique. Dans le document précité le délai de retard optimal est déterminé à partir des caractéristiques du câble données par le fabricant, par mesure de temps au moment de la mise en route de l'installation ou de manière automatique en mesurant le temps de propagation d'un front de tension sur le câble. Cependant ce document ne propose aucune solution précise pour déterminer exactement ce délai de retard.

Le but de l'invention est de proposer un procédé de paramétrage du convertisseur permettant de déterminer automatiquement ce délai de retard optimal pour pouvoir adapter précisément la commande MLI de la charge électrique aux caractéristiques réelles du câble.

Ce but est atteint par un procédé de paramétrage d'un convertisseur de type variateur de vitesse, ledit convertisseur étant relié à une charge électrique par un câble électrique comportant au moins deux conducteurs, le procédé étant caractérisé en ce qu'il consiste à :

- générer du courant de mode commun sur le câble électrique à partir d'une tension pulsée fournie par le convertisseur à la charge électrique, la tension pulsée comprenant un premier front de tension et un second front de tension retardé d'un délai de retard par rapport au premier front de tension,

- mesurer le courant de mode commun généré,

- faire varier le délai entre les deux fronts de tension générés, déterminer et mémoriser un délai de retard optimal à partir d'une grandeur représentative du courant de mode commun mesuré pour les différentes valeurs du délai de retard.

Selon un premier mode de réalisation de l'invention, le premier front de tension est généré sur un conducteur du câble entre une valeur initiale et une valeur intermédiaire et le deuxième front de tension est généré sur le même conducteur du câble, dans un même sens d'impulsion et décalé du délai de retard, entre la valeur intermédiaire et une valeur finale.

Selon un deuxième mode de réalisation, le premier front de tension est généré sur un premier conducteur du câble entre une valeur initiale et une valeur finale et en ce que le second front de tension est généré sur un deuxième conducteur du câble, dans un même sens d'impulsion et décalé du délai de retard, entre la valeur initiale et la valeur finale.

Selon l'invention, la grandeur représentative du courant de mode commun est l'intensité crête du courant de mode commun. Dans ce cas, le délai de retard optimal est déterminé en détectant le point de rupture de pente des intensités crêtes déterminées lorsque le délai de retard augmente.

Selon l'invention, la grandeur représentative du courant de mode commun peut également être l'intensité efficace du courant de mode commun. Dans ce cas, le délai de retard optimal est déterminé en détectant le minimum des intensités efficaces déterminées pour chaque valeur de délai de retard observé.

Selon une particularité, le procédé de l'invention permet de déterminer le temps de propagation du câble à partir du délai de retard optimal obtenu.

Selon une autre particularité, le procédé de l'invention consiste à déterminer la longueur du câble à partir du délai de retard optimal obtenu. Le temps de propagation ainsi que la longueur du câble sont ensuite mémorisés dans le convertisseur.

Le but de l'invention est également de proposer un convertisseur pouvant mettre en oeuvre le procédé décrit ci-dessus.

Ce but est atteint par un convertisseur de type variateur de vitesse pouvant être relié à une charge électrique par l'intermédiaire d'un câble électrique doté d'au moins deux conducteurs, ledit convertisseur étant caractérisé en ce qu'il comprend :

- des moyens pour générer du courant de mode commun à partir d'une tension pulsée fournie à ladite charge électrique, ladite tension pulsée comprenant un premier front de tension et un second front de tension retardé d'un délai de retard par rapport au premier front de tension,

- des moyens de mesure du courant de mode commun généré,

- des moyens pour faire varier le délai de retard entre les deux fronts de tension générés et des moyens de détermination et de mémorisation d'un délai de retard optimal à partir d'une grandeur représentative du courant de mode commun mesuré pour les différentes valeurs du délai.

Selon un premier mode de réalisation de l'invention, le convertisseur est à trois niveaux ou plus. Le premier front de tension est généré sur un conducteur du câble entre une valeur initiale et une valeur intermédiaire et le second front de tension est généré sur le même conducteur du câble, dans un même sens d'impulsion et décalé du délai de retard, entre la valeur intermédiaire et une valeur finale. Les moyens de mesure comportent alors un capteur de courant placé sur le conducteur du câble électrique.

Selon un deuxième mode de réalisation de l'invention, le convertisseur est à deux niveaux ou plus. Dans ce cas, le premier front de tension est généré sur un premier conducteur du câble entre une valeur initiale et une valeur finale et le second front de tension est généré sur un deuxième conducteur du câble, dans un même sens d'impulsion et décalé du délai de retard, entre la valeur initiale et la valeur finale. Les moyens de mesure peuvent alors comporter un capteur de courant placé sur l'un des deux conducteurs du câble ou un capteur de courant placé sur chacun des deux conducteurs du câble, un sommateur étant utilisé pour additionner les courants de mode commun mesurés sur chacun des conducteurs.

Selon l'invention, les moyens de détermination peuvent comporter un détecteur de l'intensité crête du courant de mode commun mesuré pour chaque valeur de délai de retard. Dans ce cas, le délai optimal est le délai de retard correspondant au point de rupture de pente des intensités crêtes détectées lorsque le délai de retard augmente.

Selon l'invention, les moyens de détermination peuvent également comporter un détecteur de l'intensité efficace du courant de mode commun mesuré pour chaque valeur de délai de retard. Dans ce cas, le délai de retard optimal est le délai de retard correspondant au minimum des intensités efficaces déterminées pour chaque valeur de délai.

Selon l'invention, le convertisseur peut comporter des moyens de détermination et de mémorisation du temps de propagation du câble ainsi que de la longueur du câble à partir du délai de retard optimal obtenu.

Le délai de retard optimal déterminé peut être utilisé directement dans la commande MLI de la charge pour minimiser les surtensions aux bornes de la machine en suivant le procédé décrit dans la demande de brevet antérieure précitée. A partir de ce délai optimal, on peut également déterminer le temps de propagation d'un front de tension sur le câble ainsi que la longueur du câble. Connaissant ces différents paramètres, il est possible :

- d'adapter la commande MLI,

- de choisir des filtres contre les surtensions et/ou les courants de fuite (filtre CEM, sinus, dv/dt) ou,

- de corriger certains paramètres de la charge tels que la résistance statorique.

D'autres caractéristiques et avantages vont apparaître dans la description détaillée qui suit en se référant à un mode de réalisation donné à titre d'exemple et représenté par les dessins annexés sur lesquels :

- La figure 1 représente un graphique montrant le signal de tension produit par un convertisseur à deux niveaux et les oscillations de tension engendrées par ce signal de tension sur le câble électrique.

- La figure 2 représente un schéma d'une installation comportant un convertisseur à deux niveaux.

- La figure 3 représente un schéma d'une installation comportant un convertisseur à trois niveaux de type NPC.

- La figure 4 représente de manière simplifiée les installations des figures 2 et 3.

- Les figures 5A, 5B, 5C représentent des graphiques montrant les courbes du signal de tension produit sur le câble électrique par un convertisseur à trois niveaux ou plus vu côté convertisseur et les oscillations de tension engendrées par ce signal de tension sur le câble électrique vu côté charge.

- Les figures 7A à 7E représentent des graphiques montrant chacun le signal du courant de mode commun mesuré en sortie du convertisseur sur un conducteur du câble électrique en fonction du signal de tension appliqué sur ce conducteur et illustré respectivement par les courbes représentées sur les figures 6A à 6E.

- Les figures 8A et 8B représentent des graphiques sur chacun desquels est reproduit le signal de tension envoyé sur un conducteur distinct du câble à l'aide d'un convertisseur à deux niveaux ou plus.

- La figure 9 représente de manière simplifiée le profil de courbe montrant la variation de l'intensité crête en fonction du délai de retard observé entre l'envoi de deux fronts de tension.

- La figure 10 représente de manière simplifiée le profil de courbe montrant la variation de l'intensité efficace du courant de mode commun en fonction du délai de retard observé entre l'envoi de deux fronts de tension.

- La figure 11 représente le signal de la tension obtenu après l'envoi d'un front de tension vers la charge et une réflexion de ce front de tension sur le convertisseur mis en état de haute impédance.

- La figure 12 représente le signal d'intensité obtenu pour certains types de câbles, après l'envoi d'un front de tension et une réflexion de ce front de tension sur le convertisseur mis en état de haute impédance

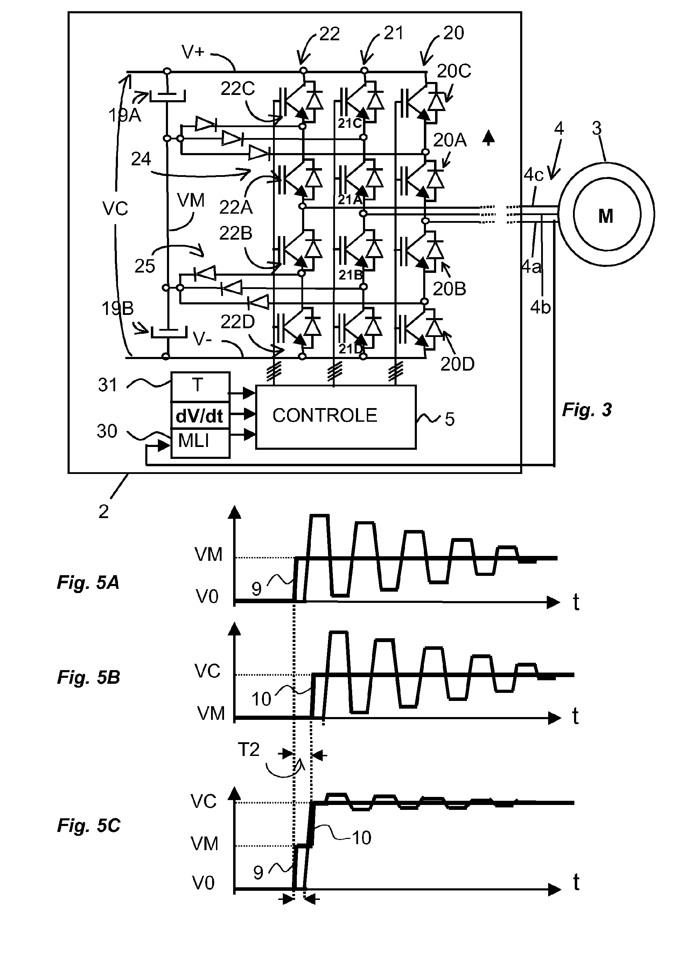

Les figures 2 et 3 montrent les structures d'un convertisseur à deux niveaux (1, figure 2) ou à trois niveaux (2, figure 3) de type variateur de vitesse pour une charge électrique 3. Un convertisseur 1, 2 comporte typiquement des semi-conducteurs de puissance pour hacher une tension électrique Vc continue en modulation de largeur d'impulsion (MLI ou PWM pour "Pulse Width Modulation"). La structure d'un tel convertisseur 1, 2 est généralement composée d'un redresseur ou d'une alimentation A ayant une entrée connectée à une ligne de réseau électrique en courant alternatif et une sortie fournissant au moins une tension en courant continu ou redressé VC à un onduleur ou un hacheur comprenant des bras 6, 20-22 à semi-conducteurs de puissance. En sortie des bras, un câble électrique 4 est relié à une charge électrique 3 de type moteur synchrone ou asynchrone pour fournir une tension électrique pulsée. Un dispositif de commande 5 du convertisseur 1, 2 contrôle la conduction et le blocage des semi-conducteurs. Le câble électrique 4 comporte par exemple au moins deux conducteurs 4a, 4b, 4c ou phases et plus généralement trois conducteurs.

La figure 3 montre plus particulièrement la structure d'un convertisseur 2 à trois niveaux, de type NPC (Neutral Point Clamped), commandé par un dispositif de contrôle 5. Ce convertisseur 2 comprend trois bras 20, 21, 22 pour produire une tension triphasée qui alimente la charge électrique 3 par le câble électrique 4. Chaque bras 20, 21, 22 comprend les semi-conducteurs 20a-22d de puissance qui sont commandés en vue de fournir sur un ou plusieurs conducteurs 4a, 4b, 4c du câble 4 la tension pulsée à la charge électrique 3. Les semi-conducteurs 20a-22d sont notamment des transistors à effet de champs, a métal oxyde semi-conducteur ou bipolaires à grille isolée avec de préférence une diode anti-parallèle intégrée.

Dans ce convertisseur 2 à trois niveaux, une tension médiane ou intermédiaire VM est générée sur un point commun de deux condensateurs 19A, 19B connectés en série entre les tensions V+ positive et V- négative de la tension continue VC.

Le convertisseur 2 à trois niveaux de type NPC représenté sur la figure 3 est apte à fournir des fronts de tension comportant trois niveaux de tension dans un sens montant ou descendant et de polarité positive ou négative selon le signe de courant sortant de chaque bras 20, 21, 22 vers un conducteur 4a, 4b, 4c du câble 4. Selon le sens du front montant ou descendant, les semi-conducteurs 20a-22d sont commandés à l'amorçage correspondant au début de conduction et au blocage pour fournir les trois niveaux de tension.

Dans le cas où le courant sortant du convertisseur 2 est positif, chaque bras comporte un semi-conducteur 20A, 21A ou 22A pouvant être commandé à l'amorçage pour fournir un premier front positif de tension intermédiaire VM à travers une des diodes 24 et au blocage pour fournir un second front de tension négatif depuis la ligne d'alimentation négative V- accessible par les diodes des semi-conducteurs 20B - 20D, 21 B - 21 D ou 22B - 22D. Chaque bras comporte aussi un semi-conducteur 20C, 21C ou 22C pouvant être commandé à l'amorçage pour fournir un second front de tension positif depuis la ligne d'alimentation positive V+ et au blocage pour fournir un premier front négatif de tension intermédiaire VM à travers une des diodes 24.

Dans le cas où le courant sortant du convertisseur est négatif, chaque bras comporte un semi-conducteur 20B, 21 B ou 22B pouvant être commandé à l'amorçage pour fournir un premier front négatif de tension intermédiaire VM à travers une des diodes 25, et au blocage pour fournir un second front positif depuis la ligne d'alimentation positive V+ accessible par les diodes des semi-conducteurs 20A - 20C, 21A - 21C ou 22A - 22C. Chaque bras comporte aussi un semi-conducteur 20D, 21 D ou 22D pouvant être commandé à l'amorçage pour fournir un second front négatif de tension depuis la ligne d'alimentation négative V- et au blocage pour fournir un premier front positif de tension intermédiaire VM à travers une des diodes 25.

En fonctionnement normal de la charge électrique 3, le convertisseur 2 est commandé pour générer une tension pulsée dont la forme permet d'atténuer les réflexions d'ondes sur les conducteurs 4a, 4b, 4c du câble électrique 4 et ainsi de limiter les surtensions aux bornes de la charge électrique 3. Comme décrit dans le document EP1580873 (ou US2005/207194) et en référence à la figure 5C, cette tension pulsée consiste à envoyer sur des conducteurs 4a, 4b, 4c du câble 4 un premier front montant 9 entre une valeur V0 faible ou nulle et une valeur intermédiaire VM inférieure à une tension d'alimentation VC (figure 5A), puis un second front montant 10 entre ladite valeur intermédiaire VM et une valeur haute sensiblement égale à la tension d'alimentation VC après un délai de retard T2 prédéterminé (figure 5B). Le second front de tension montant est appliqué avec un délai de retard T2 formant un palier à la tension VM qui est préférentiellement de deux fois le temps de propagation Tp du câble 4, pour correspondre à un aller et retour de la propagation d'onde d'un front sur le câble 4. Sur la figure 3 le circuit de contrôle 5 commande les transistors en fonction d'une régulation par largeur d'impulsion 30, et d'un paramétrage 31 d'un temps de propagation Tp.

Selon l'invention, le convertisseur 1, 2 comporte des moyens de traitement 7 permettant de déterminer le délai de retard T2 optimal à observer entre la génération des deux fronts de tension. Le délai de retard T2 déterminé automatiquement par le convertisseur 1, 2 est ensuite mémorisé dans le convertisseur. Ce délai de retard optimal T2 correspond à deux fois le temps de propagation Tp d'un front de tension sur le câble 4. La détermination par le convertisseur du délai de retard optimal T2 lui permet donc de déduire directement le temps de propagation Tp du câble. Connaissant le temps de propagation Tp du câble, le convertisseur à l'aide de ses moyens de traitement 7 peut en déduire la longueur du câble 4 à partir de la formule suivante :

$$Tp = 2\pi \sqrt{L.C}$$

Connaissant Tp, il est en effet possible de déterminer $\sqrt{L.C}$ pour toute la longueur du câble 4 et donc, à partir de la valeur de $\sqrt{L_0 C}_0$ par mètre de câble (connue car indiquée par le fabricant du câble), d'en déduire la longueur du câble 4.

Outre le fait de pouvoir minimiser les surtensions aux bornes de la charge électrique 3 en appliquant le processus décrit ci-dessus dans un convertisseur 2 à trois niveaux ou plus, la connaissance des paramètres du câble 4 et notamment sa longueur présente également un intérêt dans un convertisseur à deux niveaux ou plus car elle permet de pouvoir adapter la commande MLI, de pouvoir choisir des filtres contre les surtensions ou même de corriger certains paramètres de la charge électrique 3 tels que par exemple la résistance statorique.

Le processus de paramétrage selon l'invention pour les déterminations du délai de retard optimal et des différentes caractéristiques du câble 4 peut être mis en oeuvre à tout instant et notamment à chaque changement de câble 4 reliant le convertisseur à la charge électrique 3.

Selon l'invention, le paramétrage de ce délai de retard T2 dans le convertisseur 1, 2 est réalisé préalablement à sa mise en fonctionnement normal, en générant du courant de mode commun. La génération de courant de mode commun est réalisée en envoyant un même signal sur un ou plusieurs conducteurs 4a, 4b, 4c du câble 4 tout en bloquant les semi-conducteurs commandant l'alimentation du ou des conducteurs 4a, 4b, 4c sur lesquels aucun signal n'est envoyé.

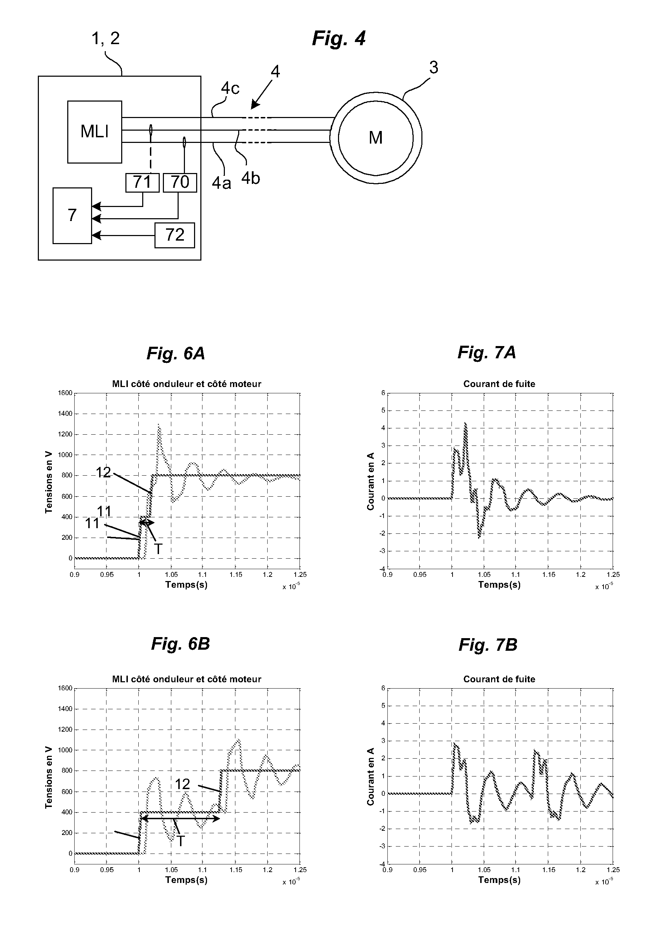

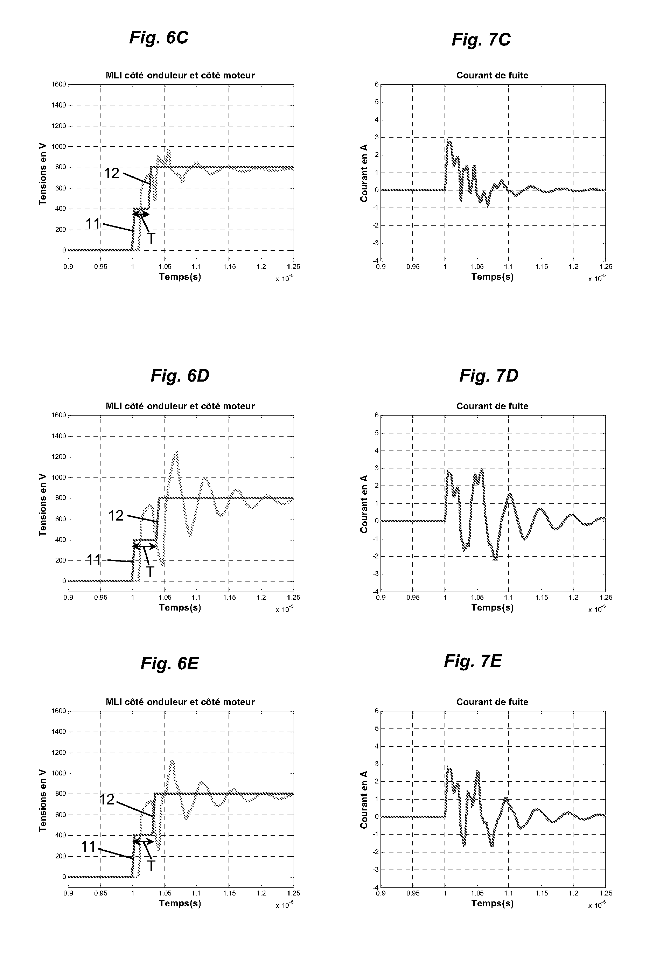

Selon un premier mode de réalisation de l'invention, un convertisseur 2 à trois niveaux ou plus est commandé pour générer dans un même sens d'impulsion, positif ou négatif, une tension pulsée comprenant deux fronts de tension 11, 12 successifs sur un conducteur 4a du câble électrique 4, l'envoi du second front de tension étant retardé d'un délai de retard T par rapport au premier front de tension (figures 6A à 6E). Un premier front de tension montant 11 est par exemple réalisé entre une première valeur faible ou nulle V0 et une valeur intermédiaire VM telle que par exemple la moitié de la tension d'alimentation puis après un palier de tension à la valeur intermédiaire durant un certain délai de retard T, le second front de tension montant 12 est envoyé entre la valeur intermédiaire VM et une valeur finale supérieure à la valeur intermédiaire et sensiblement égale à la tension d'alimentation VC.

On utilise un capteur de courant 70 (figure 4) placé sur le conducteur 4a pour mesurer le courant de mode commun généré par la succession des deux fronts de tension 11, 12 séparés du délai de retard T. Cette opération est reproduite plusieurs fois successivement en observant à chaque fois entre les deux fronts de tension 11, 12 un délai de retard T différent (figures 6A à 6E). Pour chaque impulsion composée de deux fronts de tension 11, 12 séparés d'un délai de retard T différent, on mesure le courant de mode commun généré (figures 7A à 7E) grâce au capteur de courant 70 placé sur le conducteur 4a.

Les courbes représentées en figures 7A à 7E montrent pour différentes valeurs du délai de retard T observé entre les deux fronts de tension 11, 12, le signal du courant de mode commun mesuré.

Le convertisseur 2 comporte des moyens de traitement 7 comportant un détecteur de crête permettant pour chaque signal du courant de mode commun mesuré de déterminer le courant crête Icrête correspondant. Dans une autre configuration, les moyens de traitement 7 peuvent comporter un détecteur du courant efficace constitué d'un redresseur de courant et d'un intégrateur permettant pour chaque signal de courant de mode commun mesuré de déterminer l'intensité efficace Ieff selon la formule connue :

$$Ieff = \sqrt{\frac{1}{T} \cdot \int_{t}^{t+T} i^2(t).dt}$$

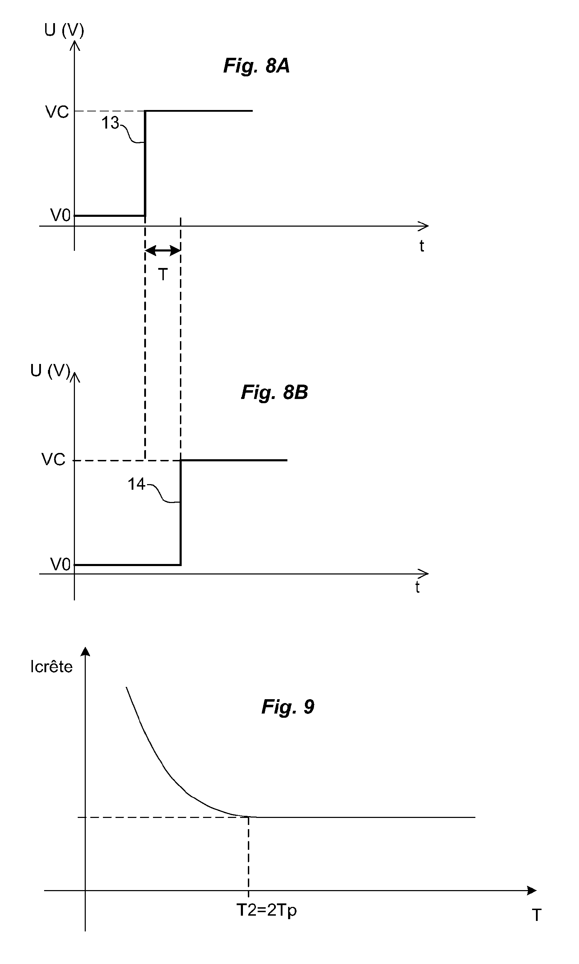

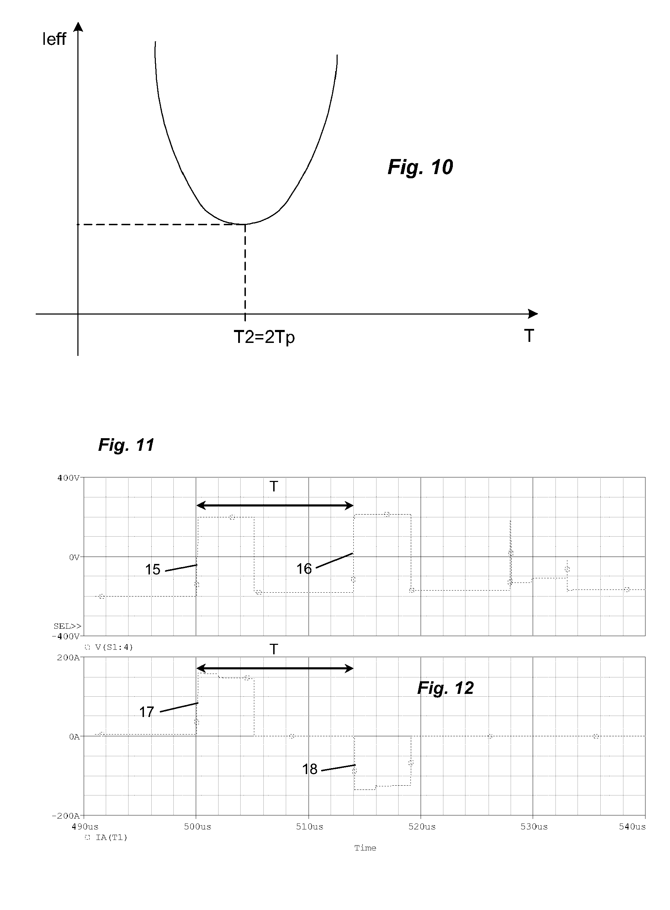

La figure 9 représente le profil de la courbe montrant la variation de l'intensité crête Icrête du courant de mode commun en fonction des valeurs de délai de retard T observé entre les deux fronts de tension 11, 12. De même, la figure 10 représente le profil de courbe montrant la variation de l'intensité efficace Ieff du courant de mode commun en fonction du délai de retard T observé entre les deux fronts de tension 11, 12.

Enfin, il s'agit de déterminer le délai de retard optimal T2 à partir des intensités crêtes Icrête ou des intensités efficaces Ieff déterminées en fonction du délai de retard T observé entre les deux fronts de tension 11, 12. Les moyens de traitement 7 déterminent le point de rupture de pente des intensités crêtes Icrête lorsque le délai de retard T augmente (Ic opt sur la figure 9) ou le minimum des intensités efficaces Ieff (Ieff opt sur la figure 10). Le délai de retard T correspondant au point de rupture de pente des intensités crêtes Icrête lorsque le délai de retard T augmente ou au minimum des intensités efficaces Ieff correspond au délai de retard optimal T2 recherché. Ce délai de retard T2 est mémorisé dans le convertisseur 2 et doit être observé en fonctionnement normal entre deux fronts de tension 9, 10 successifs en vue d'éviter les surtensions aux bornes de la charge électrique 3.

Selon un second mode de réalisation de l'invention, un convertisseur 1, 2 à deux niveaux ou plus est commandé pour envoyer suivant un même sens d'impulsion, positif ou négatif, un premier front de tension 13 sur un premier conducteur 4a du câble 4 entre une valeur faible V0 ou nulle et une valeur finale par exemple sensiblement égale à la tension d'alimentation VC de la charge 3 (figure 8A) puis un second front de tension 14 identique au premier sur un second conducteur 4b du câble 4, entre la même valeur initiale faible ou nulle V0 et la même valeur finale sensiblement égale à la tension d'alimentation de la charge VC (figure 8B). Un délai de retard T est observé entre l'envoi des deux fronts de tension 13, 14. Selon cette variante de réalisation, le courant de mode commun généré par les deux fronts de tension 13, 14 est mesuré en utilisant un ou deux capteurs de courant 70, 71.

Un seul capteur de courant 70 (figure 4) peut être suffisant si le premier et le second conducteurs 4a, 4b recevant les deux fronts de tension 13, 14 sont suffisamment proches l'un de l'autre. L'action du second front de tension 14 envoyé sur le second conducteur 4b se répercute alors par couplage capacitif sur la mesure du courant de mode commun généré sur le premier conducteur 4a. La totalité du courant de mode commun généré par les deux fronts de tension 13, 14 est mesuré par le capteur de courant 70. En revanche, si les deux conducteurs 4a, 4b sont isolés l'un de l'autre, on utilise deux capteurs de courant 70, 71 (figure 4). Un premier capteur de courant 70 placé sur le premier conducteur 4a permet de mesurer le courant de mode commun généré par le premier front de tension 13 sur le premier conducteur 4a et un second capteur de courant 71 permet de mesurer le courant de mode commun généré par le second front de tension 14 sur le second conducteur 4b. Les moyens de traitement 7 comportent un sommateur permettant ensuite d'additionner les courants de mode commun mesurés par chaque capteur de courant 70, 71.

Comme décrit dans le premier mode de réalisation, on fait varier le délai de retard T entre les deux fronts de tension 13, 14. Le courant de mode commun mesuré pour chaque valeur de délai de retard T est ensuite traité par les moyens de traitement 7 pour en extraire, pour chaque valeur de délai T, soit l'intensité crête Icrête soit l'intensité efficace Ieff comme décrit précédemment.

La détermination du délai optimal est réalisée à partir des valeurs d'intensité crête Icrête ou d'intensité efficace Ieff déterminées. Les profils de courbes obtenus sont ceux représentés en figures 9 et 10 et décrits précédemment. Le délai de retard optimal T2 est la valeur correspondante au point de rupture de pente des intensités crêtes Icrête lorsque le délai de retard T augmente (Ic opt sur la figure 9) ou au minimum des intensités efficaces Ieff (Ieff opt sur la figure 10). Observer ce délai de retard optimal T2 entre deux fronts de tension 9, 10 successifs envoyés par un convertisseur 2 trois niveaux ou plus permet de limiter les surtensions aux bornes de la charge électrique 3 en fonctionnement normal.

Selon une variante de réalisation à ces deux modes de réalisation mise en oeuvre à l'aide d'un convertisseur à deux niveaux ou plus, le délai de retard optimal T2 est déterminé après l'envoi d'un front de tension 15 sur un conducteur 4a du câble 4 et la mise en haute impédance du convertisseur 1, 2 pour générer un front de tension 16 de réflexion (figure 11) sur le même conducteur 4a.

Selon cette variante, le convertisseur 1, 2 est commandé pour envoyer un front de tension 15 sur au moins un conducteur 4a du câble 4. Compte tenu de l'impédance forte de la charge électrique 3, ce front de tension 15 se réfléchit en partie sur la charge 3 ce qui crée des oscillations de tension sur le conducteur 4a. Le convertisseur 1, 2 qui présente normalement une impédance faible voire nulle est alors mis en haute impédance en bloquant les semi-conducteurs commandant l'alimentation du conducteur 4a. La mise en haute impédance du convertisseur 1, 2 entraîne donc une nouvelle réflexion du front de tension sur le convertisseur 1, 2 ce qui engendre un nouveau front de tension 16 sur le conducteur 4a à destination de la charge 3.

A l'aide d'un capteur de tension 72 (figure 4) implanté dans le variateur de vitesse, on mesure les variations de la tension générées par l'envoi du front de tension 15 commandé par le convertisseur 1, 2. Deux traitements différents du signal de tension obtenu peuvent être mis en oeuvre par les moyens de traitement 7 pour déterminer le délai de retard optimal T2.

Un premier traitement consiste, à partir du signal de tension représenté en figure 11, à déclencher une horloge au moment de l'envoi du premier front de tension 15 et à détecter le moment où ce front de tension 16 est réfléchi sur le convertisseur 1, 2 alors en haute impédance. Le délai séparant ces deux moments correspond à un aller et retour sur le conducteur 4a du câble électrique 4 et correspond donc à deux fois le temps de propagation Tp d'un front de tension câble 4. Ce délai correspond donc au délai de retard optimal T2 à observer entre la génération de deux fronts de tension 9, 10 successifs lors du fonctionnement normal de la charge électrique 3 pour limiter les surtensions aux bornes de cette charge 3.

Le second traitement consiste à déterminer la tension efficace Ueff à partir du signal de tension récupéré par le capteur de tension 72. La tension mesurée est redressée et intégrée pour en déduire la tension efficace Ueff à partir de la formule connue suivante :

$$Ueff = \sqrt{\frac{1}{T} \cdot \int_{t}^{t+T} u^2(t).dt}$$

La tension efficace Ueff est donc déterminée en intégrant la tension redressée mesurée sur le conducteur 4a. Or, l'amplitude de la tension définie ci-dessus par Vc peut être connue par une mesure indépendante de la tension continue sur le bus du variateur de vitesse. Cette amplitude est la tension appliquée sur la période T. A partir de la formule ci-dessus, on connaît Ueff et la tension Vc sur la période T. On peut donc déduire T qui correspond au délai optimal T2 recherché et à deux fois le temps de propagation Tp du câble 4.

En utilisant un capteur de courant 70 placé sur le conducteur 4a sur lequel a été envoyé le premier front de tension 15 à la place du capteur de tension 72, on peut également mesurer le courant I généré par l'envoi de ce front de tension 15 et par la réflexion de ce front de tension 15 sur le convertisseur 1, 2 suite à sa mise en haute impédance. Le signal obtenu est représenté en figure 11. Selon certaines caractéristiques du câble électrique employé et notamment selon sa résistance, la réflexion sur le convertisseur peut se faire avec un coefficient supérieur à 0 ce qui permet de détecter un courant I correspondant à la réflexion du front de tension 16. L'envoi du premier front de tension 15 est visualisé sur la courbe de la figure 11 par une première impulsion d'intensité 17 et le front de tension réfléchi 16 sur le convertisseur 1, 2 alors en haute impédance est visualisé par la deuxième impulsion d'intensité 18 qui est négative. Les moyens de traitement 7 comportent une horloge mesurant la durée écoulée entre la détection de ces deux impulsions d'intensité. Cette durée correspond à deux fois le temps de propagation Tp du câble 4 et donc au délai de retard optimal T2 recherché.

Il est bien entendu que l'on peut, sans sortir du cadre de l'invention, imaginer d'autres variantes et perfectionnements de détail et de même envisager l'emploi de moyens équivalents.

## Revendications

1. Procédé de paramétrage d'un convertisseur (1, 2) de type variateur de vitesse, ledit convertisseur (1, 2) étant relié à une charge électrique (3) par un câble électrique (4) comportant au moins deux conducteurs, le procédé étant **caractérisé en ce qu'**il consiste à :

    - générer du courant de mode commun sur le câble électrique (4) à partir d'une tension pulsée fournie par le convertisseur (1, 2) à la charge électrique (3), la tension pulsée comprenant un premier front de tension (11, 13) et un second front de tension (12, 14) retardé d'un délai de retard (T) par rapport au premier front de tension (11, 13),
    - mesurer le courant de mode commun généré,
    - faire varier le délai (T) entre les deux fronts de tension (11, 12, 13, 14) générés, déterminer et mémoriser un délai de retard optimal (T2) à partir d'une grandeur (Icrête, Ieff) représentative du courant de mode commun mesuré pour les différentes valeurs du délai de retard (T).

2. Procédé selon la revendication 1, **caractérisé en ce que** le premier front de tension (11) est généré sur un conducteur du câble (4) entre une valeur initiale (V0) et une valeur intermédiaire (VM) et **en ce que** le deuxième front de tension (12) est généré sur le même conducteur du câble (4), dans un même sens d'impulsion et décalé du délai de retard (T), entre la valeur intermédiaire (VM) et une valeur finale (VC).

3. Procédé selon la revendication 1, **caractérisé en ce que** le premier front de tension (13) est généré sur un premier conducteur du câble (4) entre une valeur initiale (V0) et une valeur finale (VC) et **en ce que** le second front de tension (14) est généré sur un deuxième conducteur du câble (4), dans un même sens d'impulsion et décalé du délai de retard (T), entre la valeur initiale (V0) et la valeur finale (VC).

**4.** Procédé selon l'une des revendications 1 à 3, **caractérisé en ce que** la grandeur représentative du courant de mode commun est l'intensité crête (Icrête) du courant de mode commun.

**5.** Procédé selon la revendication 4, **caractérisé en ce que** le délai de retard optimal (T2) est déterminé en détectant le point de rupture de pente des intensités crêtes (Icrête) déterminées lorsque le délai de retard (T) augmente.

**6.** Procédé selon l'une des revendications 1 à 3, **caractérisé en ce que** la grandeur représentative du courant de mode commun est l'intensité efficace (Ieff) du courant de mode commun.

**7.** Procédé selon la revendication 6, **caractérisé en ce que** le délai de retard optimal (T2) est déterminé en détectant le minimum des intensités efficaces (Ieff) déterminées pour chaque valeur de délai de retard (T) observé.

**8.** Procédé selon l'une des revendications 1 à 7, **caractérisé en ce qu'**il consiste à déterminer le temps de propagation (Tp) du câble (4) à partir du délai de retard optimal (T2) obtenu.

**9.** Procédé selon l'une des revendications 1 à 8, **caractérisé en ce qu'**il consiste à déterminer la longueur du câble (4) à partir du délai de retard optimal (T2) obtenu.

**10.** Convertisseur (1, 2) de type variateur de vitesse pouvant être relié à une charge électrique (3) par l'intermédiaire d'un câble électrique (4) doté d'au moins deux conducteurs, ledit convertisseur étant **caractérisé en ce qu'**il comprend :

- des moyens pour générer du courant de mode commun à partir d'une tension pulsée fournie à ladite charge électrique (3), ladite tension pulsée comprenant un premier front de tension (11, 13) et un second front de tension (12, 14) retardé d'un délai de retard (T) par rapport au premier front de tension (11, 13),
- des moyens de mesure du courant (70, 71) de mode commun généré,
- des moyens pour faire varier le délai de retard (T) entre les deux fronts de tension (11, 12, 13, 14) générés et des moyens de détermination (7) et de mémorisation d'un délai de retard optimal (T2) à partir d'une grandeur (Icrête, Ieff) représentative du courant de mode commun mesuré pour les différentes valeurs du délai (T).

**11.** Convertisseur selon la revendication 10, **caractérisé en ce qu'**il est à trois niveaux ou plus et **en ce que** le premier front de tension (11) est généré sur un conducteur (4a) du câble (4) entre une valeur initiale (V0) et une valeur intermédiaire (VM) et **en ce que** le second front de tension (12) est généré sur le même conducteur (4a) du câble (4), dans un même sens d'impulsion et décalé du délai de retard (T), entre la valeur intermédiaire (VM) et une valeur finale (VC).

**12.** Convertisseur selon la revendication 11, **caractérisé en ce que** les moyens de mesure comportent un capteur de courant (70) placé sur le conducteur (4a) du câble électrique (4).

**13.** Convertisseur selon la revendication 10, **caractérisé en ce qu'**il est à deux niveaux ou plus et **en ce que** le premier front de tension (13) est généré sur un premier conducteur (4a) du câble (4) entre une valeur initiale (V0) et une valeur finale (VC) et **en ce que** le second front de tension (14) est généré sur un deuxième conducteur (4b) du câble (4), dans un même sens d'impulsion et décalé du délai de retard (T), entre la valeur initiale (V0) et la valeur finale (VC).

**14.** Convertisseur selon la revendication 13, **caractérisé en ce que** les moyens de mesure comportent un capteur de courant (70) placé sur l'un des deux conducteurs (4a, 4b) du câble (4).

**15.** Convertisseur selon la revendication 13, **caractérisé en ce que** les moyens de mesure comportent un capteur de courant (70, 71) placé sur chacun des deux conducteurs (4a, 4b) du câble (4) et **en ce qu'**un sommateur est apte à additionner les courants de mode commun mesurés sur chacun des conducteurs (4a, 4b).

**16.** Convertisseur selon l'une des revendications 10 à 15, **caractérisé en ce que** les moyens de détermination (7) comportent un détecteur de l'intensité crête (Icrête) du courant de mode commun mesuré pour chaque valeur de délai de retard (T).

**17.** Convertisseur selon la revendication 16, **caractérisé en ce que** le délai optimal (T2) est le délai de retard (T) correspondant au point de rupture de pente des intensités crêtes (Icrête) détectées lorsque le délai de retard (T) augmente.

**18.** Convertisseur selon l'une des revendications 10 à 15, **caractérisé en ce que** les moyens de détermination (7) comportent un détecteur de l'intensité efficace (Ieff) du courant de mode commun mesuré pour chaque valeur de délai de retard (T).

**19.** Convertisseur selon la revendication 18, **caractérisé en ce que** le délai de retard optimal (T2) est le délai de retard (T) correspondant au minimum des intensités efficaces (Ieff) déterminées pour chaque valeur de délai.

**20.** Convertisseur selon l'une des revendications 10 à 19, **caractérisé en ce qu'**il comporte des moyens de détermination (7) du temps de propagation (Tp) du câble (4) à partir du délai de retard optimal (T2) obtenu.

**21.** Convertisseur selon l'une des revendications 10 à 20, **caractérisé en ce qu'**il comporte des moyens de détermination (7) de la longueur du câble (4) à partir du délai de retard optimal (T2) obtenu.

*Fig. 1*

*Fig. 2*

*Fig. 3*

*Fig. 5A*

*Fig. 5B*

*Fig. 5C*

## *Fig. 4*

## *Fig. 6A*

MLI côté onduleur et côté moteur

## *Fig. 7A*

Courant de fuite

## *Fig. 6B*

MLI côté onduleur et côté moteur

## *Fig. 7B*

Courant de fuite

**Fig. 6C**

MLI côté onduleur et côté moteur

**Fig. 7C**

Courant de fuite

**Fig. 6D**

MLI côté onduleur et côté moteur

**Fig. 7D**

Courant de fuite

**Fig. 6E**

MLI côté onduleur et côté moteur

**Fig. 7E**

Courant de fuite

## Fig. 8A

U (V)

VC

13

V0

t

T

## Fig. 8B

U (V)

VC

14

V0

t

## Fig. 9

Icrête

T2=2Tp

T

Ieff

*Fig. 10*

T2=2Tp

T

*Fig. 11*

400V

T

0V

15          16

SEL>>
-400V
□ V(S1:4)

T

200A

*Fig. 12*

17

0A

18

-200A
490us          500us          510us          520us          530us          540us
□ IA(T1)

Time

**Office européen**

**des brevets**

**RAPPORT DE RECHERCHE EUROPEENNE**

Numéro de la demande

EP 07 10 2692

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 1 580 873 A (SCHNEIDER ELECTRIC IND SA [FR]) 28 septembre 2005 (2005-09-28) * abrégé * * alinéas [0011] - [0013] * * alinéa [0049] * * figures *  ----- | 1-21 | INV. H02M7/48 |
| | | | **DOMAINES TECHNIQUES RECHERCHES (IPC)** |
| | | | H02M |

Le présent rapport a été établi pour toutes les revendications

| Lieu de la recherche | Date d'achèvement de la recherche | Examinateur |
|---|---|---|
| La Haye | 4 juillet 2007 | MARANNINO, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 07 10 2692

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2007

| Document brevet cité au rapport de recherche | Date de publication | Membre(s) de la famille de brevet(s) | Date de publication |
|---|---|---|---|
| EP 1580873 A | 28-09-2005 | CN 1674427 A<br>FR 2867915 A1<br>JP 2005278394 A<br>US 2005207194 A1 | 28-09-2005<br>23-09-2005<br>06-10-2005<br>22-09-2005 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1580873 A
- US 2005207194 A